(19) Europäisches Patentamt / European Patent Office / Office européen des brevets

(11) **EP 3 954 986 A1**

(12) **EUROPEAN PATENT APPLICATION**
published in accordance with Art. 153(4) EPC

(43) Date of publication:
**16.02.2022 Bulletin 2022/07**

(21) Application number: **20731902.1**

(22) Date of filing: **13.04.2020**

(51) International Patent Classification (IPC):
**G01N 27/327** *(2006.01)*     **G01N 27/416** *(2006.01)*

(52) Cooperative Patent Classification (CPC):
**G01N 27/3271;** G01N 27/4168

(86) International application number:
**PCT/ES2020/070237**

(87) International publication number:
**WO 2020/208286 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2019 ES 201930320**

(71) Applicants:
• **Consejo Superior De Investigaciones Científicas**
**28006 Madrid (ES)**
• **FUNDACIÓ PRIVADA Institució Catalana de Recerca**
**i Estudis Avançats ("ICREA")**
**08010 Barcelona (ES)**

(72) Inventors:
• **SAILAPU, Sunil Kumar**
**08193 Cerdanyola del Vallès (Barcelona) (ES)**
• **MERINO JIMÉNEZ, Irene**
**08193 Cerdanyola del Vallès (Barcelona) (ES)**
• **LLORELLA BUSTINS, Anna**
**08193 Cerdanyola del Vallès (Barcelona) (ES)**
• **ESQUIVEL BOJÓRQUEZ, Juan Pablo**
**08193 Cerdanyola del Vallès (Barcelona) (ES)**
• **NAVARRO SEGARRA, Marina**
**08193 Cerdanyola del Vallès (Barcelona) (ES)**
• **SABATÉ VIZCARRA, Neus**
**08193 Cerdanyola del Vallès (Barcelona) (ES)**

(74) Representative: **Pons**
**Glorieta Rubén Darío 4**
**28010 Madrid (ES)**

(54) **DEVICE AND PROCEDURE FOR THE QUANTIFICATION OF THE CONCENTRATION OF ANALYTES IN A SAMPLE**

(57)     The invention refers to a device and a method of quantification of analytes concentration, making use of a device that comprises an electrochemical cell (1) which contains the analyte, a load (2) which is connected in parallel to the electrochemical cell (1), and a readout unit (3), which is connected in parallel with the load (2). This includes the stages of quantification of the concentration of analytes, the charge transfer from the electrochemical cell (1) to the load (2), the determination of the voltage across the load (2) and the determination of the analyte concentration from the correlation between the analyte concentration and the voltage across the load (2).

**FIG.1**

## Description

## OBJECTIVE OF THE INVENTION

The present invention refers to a method for the quantification of analytes concentration present in a sample by making use of a self-powered, disposable, single use device. The method relies on the combination of an electrochemical cell and an electronic load connected in parallel to it. The electronic load can be composed of a combination of at least one capacitive load and/or one resistive load. One fundamental aspect of the method is that the resistive load connected to the electrochemical cell has a value that puts the cell to work under diffusion-limited conditions. The level of the built-up voltage developed across the capacitive element can be correlated to the analyte concentration in the electrochemical cell. The built-up voltage in the capacitive element can be measured using an integrated readout unit that can be powered by the electrochemical cell itself. Alternatively, the readout unit can also be an external measuring device.

## BACKGROUND OF THE INVENTION

An analyte is a chemical species, whose presence or content in a sample is detected, identified and quantified through a chemical measuring process. The use of electrochemical systems including potentiometric or amperometric sensors and biosensors to quantity the analyte present in a sample has been widely reported.

These sensors generally consist of electrochemical cells containing a working electrode (sensing electrode), where the analyte reacts through a redox reaction, and a counter electrode, where the complementary redox reaction takes place. The sensing and counter electrodes may or may not be enzymatic. The sensing electrode is preferably selective towards the redox analyte reaction to ensure the reliability of the sensor.

These electrochemical sensors may be potentiometric, such as that presented in U.S. 2004/0245101 A1, where the open circuit voltage of the fuel cell is monitored and correlated to the concentration of analyte. This method has been designed for continuous flow conditions, where the fuel cell voltage is steady for as long as the fuel is provided with a constant flow and concentration of analyte. Although these biofuel cells operate at low efficiency, and have limited applicability as energy suppliers, the extractable electrical power is sufficient to probe the sensing elements. The sensor operates with no external power sources. However, an external readout system is needed to measure the open circuit voltage.

Alternatively, the determination of the analyte present in the sample can be performed using amperometric sensors, in which the fuel cell may be polarized by setting a constant operating voltage, applying a load or sweeping a voltage range, to generate electrical current. The fuel cell voltage or the generated current can be measured and correlated with the concentration of analyte. These systems commonly require complex electronics and an external power supply for the polarisation and recoding of electric current or voltage. Moreover, they require a dedicated external readout unit.

The use of external equipment such as a potentiostat or a power supply can be avoided by connecting the fuel cell to a load (i.e. a resistor), as reported in WO2005093400 A1, U.S. Pat. No. 9,220,451 B2 and US 2010/0213057 A1.

These type of sensors are generally regarded as self-powered, since no power supply is needed to operate them at a specific voltage or to perform a voltage sweep. However, they still need to be connected or integrated to a suitable transducer, which enables the conversion of specific analyte concentrations to electronic signals, and finally to human recognizable information.

In most cases, a voltage or current readout system is also needed. As described in US 2010/0213057 A1, the readout can be taken directly with an external unit (handheld display) or by coupling the sensor to a radio-frequency (RF) powered measurement circuit. The RF powered measurement circuit is remotely queried at regular intervals by an RF-power equipped hand-held display in order to provide continuous analyte level measurements.

The self-powered devices for analyte detection from a fuel cell are based on the correlation between the electrical current generated from the fuel cell and the concentration of analyte. However, this type of self-powered devices generally need an external receiver to receive the signal generated from the transmitting device or alternative methods to transduce the electrical current or voltage measured in the fuel cell to a user readable signal.

To ensure reproducible results, it is necessary the use of a potentiostat to sweep voltage and obtain current values. This reduces the applicability of these type of devices as they hinder the possibility to power the device as a whole from the integrated sensor, since an external power supply and other auxiliary elements are needed to power the potentiostat. Moreover, these types of devices are aimed for long-term measurements or continuous monitoring applications and the sample in generally is continuously flowed into the electrochemical cell. As a consequence, the fuel cell voltage is steady for as long as the fuel is flowing through the cell and for a wide range of resistive loads. This facilitates the measurement of the fuel cell voltage.

In certain cases, the voltage or current generated from the fuel cell is not constant over time, for example, when the volume is restricted to few microliters due to the nature of the sample such as in case of extracted blood samples from a finger prick. In this case, when the fuel cell is connected to a load and the electrochemical reaction starts, depleting the fuel and generating a concentration gradient, which is proportional to the diffusion coefficient of the analyte. Consequently, the fuel cell voltage is continuously varying and decreasing along with the concentration of sample being depleted during the measurement. This makes it extremely difficult to measure the initial concentration of analyte in the sample.

Other type of devices like reported in US 2010/0200429 A1 make use of an enzymatic fuel cell to charge a capacitor, which discharges through a signal, such as LED lighting. In this case, a charge pump was required to boost the fuel cell voltage to be fed to a capacitor. After the capacitor reached a fixed value, it discharged through a load to again get recharged and the process continued. The charging/discharging frequency of the capacitor, which depends on the concentration of analyte, is transmitted by radio frequency and a receiver identifies the signal and converts it to an analyte concentration value.

In this case, it is necessary to use external equipment to measure voltage or current, or a radio frequency receptor. Additionally, the induced electromotive force in the fuel cell, that is fed to charge pump is dependent on the concentration of the sample. Hence, as previously mentioned, the observed concentration gradients while employing low volume samples is likely to alter the charging frequency dependency.

Similarly to the device described in the previous paragraph, where the load connected to an electrochemical cell is a resistor, the volume of sample supplied to the fuel cell is crucial. In batch systems where the sample volume is such that the concentration gradient generated does not reach the end of the sample volume or for continuous flow systems, where the analyte concentration and the bulk concentration are constant and the charging/discharging cycles remain constant. In this case, the charging/discharging frequency of the capacitor can be monitored and a signal can be sent to an external reader.

On the contrary, for a small volume of sample (i.e. a drop), the charging/discharging cycles are not constant. If a threshold voltage is set, the induced voltage decreases and the charging time of capacitor will become longer in time, as the analyte in the sample is depleted. With non-constant as well as inconsistent charging/discharging cycles, the frequency measurements become irrelevant and thus fail to provide a reliable measurement. If a specific time is set for charging cycle and the discharging cycle of the capacitor, the charging/discharging voltages will decrease in time, as the fuel is being depleted. This makes the reading using a threshold voltage difficult, since voltage reached is decreasing in each cycle. This could provide an inaccurate frequency result and therefore an inaccurate analyte concentration value.

Moreover, this type of devices require complex electronics, which often need to include a charge pump and an oscillator. This reduces the applicability of the device, and limits its usage in locations with no external power source, readout unit or receivers.

## DESCRIPTION OF THE INVENTION

The object of this invention is to provide a simple method to measure the concentration of analyte in a sample fed into an electrochemical cell, which can contain a volume of sample, which might be any volume, and with the possibility to use, but with no need for an external power source or an external receiver. This method could use a single use, disposable and autonomous device, with simple, disposable and self-powered electronics, and avoiding the use of external batteries.

In particular, the method in this invention makes use of a device, which comprises an electrochemical cell, an electronic load connected in parallel to it, and a readout unit connected in parallel to the electronic load.

Specifically, the device and the method for quantifying the concentration of analyte in a sample comprises an electrochemical cell and an electronic load connected in parallel to it. The electronic load can be composed of a combination of at least one capacitive load and one resistive load.

One fundamental aspect of the device and method is that the equivalent resistance of the load connected to the electrochemical cell has a value that puts the cell to work under diffusion-limited conditions. Diffusion-limited is defined here as a condition in which the analyte reacting at the cell electrodes is consumed at an equal or faster rate than the rate of its transport through the reaction medium.

When the electrochemical cell operates in this diffusion-limited regime, it enters in a non-steady state in which the output voltage decreases with time. The current generated by the electrochemical cell in this condition is transferred totally or partially to the capacitive load. The built-up voltage developed across the capacitive element can be correlated to the analyte concentration in the electrochemical cell.

Therefore, this method allows for a simple and straightforward transduction of concentration of analyte to voltage. This device and method differ from other reported methods in a way that the method proposed here does not analyse the analyte concentration based on an output signal obtained from the frequency response obtained from multiple charging/discharging cycles. This device and method operate the electrochemical cell in a direct current (DC) mode during a single discharge cycle of the cell. This strategy allows simplifying significantly the instrumentation required to drive the electrochemical cell and readout unit.

Moreover, this device and method allow to quantify the analyte concentration of low volume or/and non-flowing samples, in which a diffusion-limited regime is established whenever any resistive load is connected to the electrochemical cell. This phenomenon, that would render other reported methods inaccurate, is taken in the present invention as an advantage and constitutes the cornerstone of the measurement principle.

The built-up voltage in the capacitive element can be measured using an integrated readout unit that is powered by the electrochemical cell itself. Alternatively, the readout unit can also be an external measuring device.

The electrochemical cell consists of at least one electrode, where the oxidation reaction takes place (anode) and one electrode, where the reduction reaction takes place (cathode). These electrodes are in contact with an electrolyte, where the ion transfer takes place.

In the electrochemical cell, at least one of the two electrodes (named sensing electrode) reacts with the analyte, through an oxidation or reduction reaction, while at the other electrode (named complementary electrode) a complementary reaction takes place (reduction or oxidation) in order to form an electrochemical cell which allows the generation of voltage and electrical current.

The sensing electrode may transfer the electrical current directly or through a mediator.

The sensing electrode may be constructed from any material, which is catalytic for the redox reaction of the analyte, including metals, alloys, redox polymers, enzymes or bacteria, such as glucose dehydrogenase enzyme, glucose oxidase, FDH, MDH, AOD, XOD, Hyderase, Gluconobacter oxidants, magnesium, palladium, bismuth, nickel, platinum, ruthenium, gold, carbon, graphite, iron, lithium, cadmium, copper, silver, zinc, aluminium, among others.

The sensing electrode may be enzymatic and similar to an electrode of a first generation enzymatic sensor. In this case, the electrode is selective towards a specific analyte, which is oxidized, while in a simultaneous reduction reaction a cofactor is reduced. Then, the reduced cofactor is oxidised, using oxygen to produce hydrogen peroxide at the electrode surface, and generating an electric signal proportional to the concentration of analyte. The sensing electrode may also be similar to an electrode of a second-generation amperometric sensor, composed by a mediator (in solution) for the electronic transfer to the electrode. The sensing electrode may also be similar to a third-generation amperometric sensor, with direct electron transfer, with the enzyme physically connected to the electrode.

At the complementary electrode, either a reduction or an oxidation reaction takes place; this reaction will be complementary to that taking place at the sensing electrode. The redox voltage of this reaction must be more electropositive than that of the reaction at the sensing electrode, if the complementary electrode acts as the cathode; or more electronegative than that at the sensing electrode, if the complementary electrode acts as the anode. This is necessary to generate a positive voltage difference between the cathodic and the anodic electrodes. The reaction taking place at the complementary electrode must not be the limiting reaction to the generation of electric current. The limiting reaction must be directly dependent on the concentration of analyte.

The complementary electrode may be formed by any redox species, complementary to the electrochemical reaction taking place at the sensing electrode. That could be metals, alloys, polymer materials reducing or oxidant, batteries or enzymes, such as iron, cobalt, nickel, benzoquinone, silver, silver oxide, silver peroxide, copper, magnesium, platinum, gold, carbon compounds, including electrodes based on activated carbon, graphite, carbon nanotubes and carbon paste, magnesium, zinc, aluminium, among others.

The sensing and complementary electrodes might be planar and distributed next to each other or in front of each other. More than one combination of sensing and complementary electrodes might be used to increase the voltage by connecting them in series or to increase the generated electric current by connecting them in parallel. Both electrodes might or might not be separated by an ion-exchange membrane, which can be selective or non-selective, by a porous material or by a salt bridge.

Besides the electrochemical cell, the device object of this invention also comprises a load, connected in parallel to the sensor, that can be resistive, capacitive, inductive, or a combination of them. By connecting the electrochemical cell to the load, it starts working under diffusion-controlled conditions. Then, the response from the electrochemical cell is dependent on the concentration of analyte in the sample. Using a reader connected in parallel to the load, the concentration of analyte can be identified from the readout of the voltage across the load.

In particular, in a first embodiment of the device, the load connected to the electrochemical cell is predominantly capacitive, being preferably a capacitor. The resistive load is set by the internal resistivity of the electrochemical cell and the ohmic resistance of the electrodes, circuit tracks and electrical connections of the assembly.

When the circuit is closed, the electrical charge generated from the electrochemical cell is transferred to the capacitor. The voltage reached across the capacitor ($V_c$) depends on the electrical charge that has been transferred from the electrochemical cell ($V_S$). This accumulated charge also depends on the concentration of analyte which has been oxidised or reduced in the electrochemical cell. As a result, the developed voltage across the capacitor ($V_c$) provides information about the concentration of analyte in the sample.

Charge accumulation makes the capacitor voltage to rise according to eq (1) where $V_C(t)$ is the voltage across the capacitor, $q(t)$ is the charge generated by the electrochemical cell working under diffusion-limited regime that is being stored in the capacitor with time and C is the capacitance of capacitor, A is the area of the cell sensing electrode, D the diffusion coefficient of the analyte, t the time and $C_o$ as the concentration of analyte. Similarly, charge accumulation can be expressed in terms of

$$V_C(t) = \frac{q(t)}{C} = \frac{nFAC_O\sqrt{Dt}}{\sqrt{\pi}C} \qquad (1)$$

As it can be seen, the capacitor built-up voltage is proportional to the analyte concentration and this allows a direct quantification of analyte content.

Under this configuration, the evolution of the built-up capacitor voltage causes the electrochemical cell voltage to rise simultaneously until the analyte is totally depleted from the sample. We can label this time as $t_{sat}$, as the capacitor voltage reaches a saturation of transferred charge, as the electrochemical cell ceases generating current.

Alternatively, the charge transfer between electrochemical cell and capacitor can be interrupted by disconnecting the two elements at a particular time with an additional such as a diode, switch, transistor among others. The final fixed value of the capacitor voltage can be taken as $V_{out}$, which is directly proportional to the quantity of analyte in the sample.

In a second embodiment, the load connected to the electrochemical cell is predominantly resistive, being preferably a resistor. In particular, a resistive load R1 is connected in parallel to the electrochemical cell as the major load. A second branch containing resistor R2, capacitor C1 and diode D1 is also connected in parallel to the electrochemical cell.

In this embodiment, once the circuit is connected to the electrochemical cell, the resistive load R1 sets the cell in a diffusion-limited regime that causes a drop in the electrochemical cell voltage from its open-circuit potential. The current generated by the electrochemical cell flows through the branches containing R1 and R2. During this process, the capacitor C1 featuring in the branch alongside resistor R2 and D1 gets charged.

Eventually, the diode D1 goes into reverse bias when the built-up voltage in the capacitor increase and electrochemical cell voltage decreases under a threshold value. When the voltage across the diode puts it in reverse bias, the current through the branch containing it almost ceases (acting like a switch to cut off the connection between electrochemical cell and capacitor), and the capacitor is held at the final charged voltage acquired just before the diode significantly obstructed the current flow.

Importantly, even after, though the electrochemical cell is constantly dropping in voltage due to the influence of R1, the capacitor C1 maintains at the final charged voltage value, as the diode restricts the current flow in reverse direction. The final built-up output voltage across the capacitor is proportional to the analyte concentration. The level of output voltages reached in the capacitive element can be modulated or shifted by the choice of the combination of resistors R1 and R2 and capacitor C1 values without affecting the response pattern.

The differences in voltage levels acquired between analyte concentrations measured in the capacitive element can be modulated by the choice of the combination of the resistors R1 and R2 and capacitance value C1.

In a third embodiment of the invention, the load connected to the electrochemical cell is predominantly resistive, being preferably a resistor. In this embodiment, once the circuit is connected to the electrochemical cell, the resistive load R1 sets the cell in a diffusion-limited regime that causes a drop in the electrochemical cell voltage from its open-circuit potential.

The rate at which the electrochemical cell voltage decays is related to the concentration of oxidized or reduced analyte in the electrochemical cell. The rate of voltage drop in an electrochemical cell voltage when subjected to resistive load R1 is slower at higher concentrations of analyte. In this embodiment, information about the analyte concentration can be obtained by measuring the elapsed time between a previously defined initial voltage and a final threshold voltage, using the readout unit.

The readout unit allows the transduction of the response generated by the electrochemical cell to a signal that allows the user to derive information on the analyte concentration. This signal might consist of a digital screen or lighting, acoustic or mechanical signals. These signals may indicate the concentration of analyte or whether it has exceeded certain predefined threshold values.

The readout unit may be integrated in the device with the electrochemical cell and the load, making this device portable and disposable. Alternatively, the readout unit may be an external component.

Alternatively, the readout unit may be powered only by the energy generated by the electrochemical cell, or alternatively, it may be powered by an external power supply or a combination of both.

More specifically, in the methodologies involving the readout of a capacitive element the readout unit may consist of any unit capable of measuring the capacitor voltage. This allows to obtain information on the analyte concentration with direct current (DC) voltage readout systems and from a single charging cycle. The readout unit may consist of one or a set of transistors, integrated circuits, application-specific integrated circuits (ASICs), a multimeter, a USB communication system with a computer, an RFID, NFC wireless communication system, or Bluetooth system among others.

In another embodiment of the device, when the load connected to the electrochemical cell is resistive, the readout unit may consist of two units that measure voltage and time simultaneously, or one unit that integrates these two functions. The readout unit may consist of, for instance, any of the options to measure the voltage mentioned in the previous paragraph, combined with a method to measure time, such as complex electronics, that might include a clock, a quartz crystal, an RC circuit or any type of external clock among others.

In another embodiment of the device, it may be possible that the load comprises a matrix of capacitors in a way that the tension reached between each of the capacitor terminals provides discrete information of the concentration of analyte in the electrochemical cell.

A specific example of the embodiment of this device for quantification of the concentration of analytes in an electrochemical cell is a glucometer, in which the concentration of glucose is quantified. Glucose is the analyte present in blood and this device may be used for the diagnostic of diabetes.

## DESCRIPTION OF THE DRAWINGS

In order to complete the description of the invention and improve the understanding of the invention characteristics, according to the preferred embodiment example, a set of drawing is presented as an integral unit of the invention description. This set of drawings, being illustrative and non-restrictive, represent the following:

Figure 1.- Shows a block-wise schematic representation of the device that carries out the procedure of analyte concentration quantification that is the subject of this invention.

Figure 2.- Shows a polarization curve of the electrochemical cell, when this is a fuel cell, a battery or a hybrid.

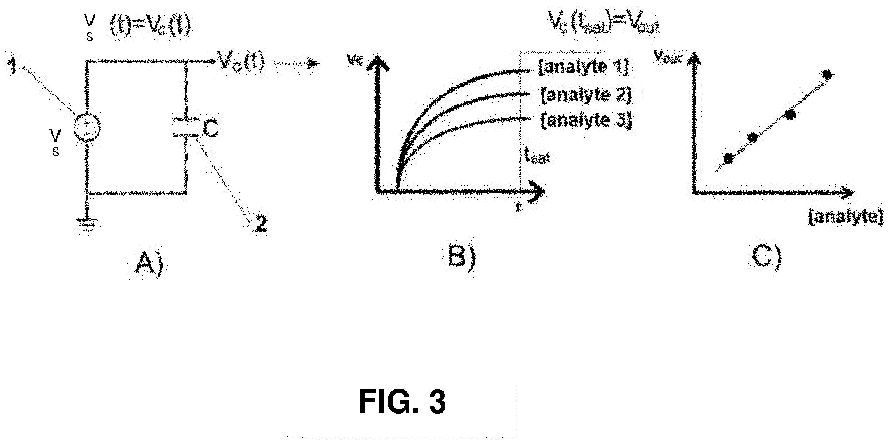

Figure 3.- A) shows the scheme of the first embodiment for analyte quantification in an electrochemical cell, where the major load corresponds to a capacitive element. B) Shows a chart where the voltage evolution in the capacitive load versus time has been depicted. Three different built-up capacitor voltage patterns corresponding to three different analyte concentrations are displayed. C) Shows a calibration curve obtained when the built-up capacitor voltage versus analyte concentration at a particular time - computed from connection of electrochemical cell to a capacitor or a series of capacitors - is depicted.

Figure 4.- Shows a scheme of the second methodology for analyte quantification in an electrochemical cell, where the major load corresponds to a resistive element.

Figure 5.- A) Shows a scheme of the electrochemical cell, the load and the readout element in the case that the load corresponds to a resistive load. B) Shows the voltage evolution of the electrochemical cell versus time when the load connected to it is a resistive load for different analyte concentrations, being said time the time elapsed since the resistive load connection. C) Shows a calibration curve obtained when the time elapsed in the drop of the voltage of the electrochemical cell between two values is depicted at different analyte concentrations.

Figure 6.- Shows an embodiment of the invention when the electrochemical cell is connected to a capacitive charge and an integrated readout element.

Figure 7.- Shows the fuel cell voltage response when connected to a capacitor as a function of the capacitor size. For a constant concentration of analyte (7.5 mM glucose), and different capacitor sizes: C = 1, 1.36, 2 and 3.3 mF.

Figure 8.- Shows the fuel cell voltage response when connected to a capacitor as a function of the glucose concentration, for a constant capacitor size of 2 mF and for different glucose concentrations (6.2, 7.8 and 11.1 mM).

Figure 9.- Shows the calibration curve obtained from the fuel cell voltage at a specific time (50 s) after the fuel cell has been connected to a capacitor (2 mF) versus the concentration of glucose in the sample.

Figure 10.- Shows an embodiment of the invention in which the electrochemical cell is connected to a resistive load and an integrated readout element.

Figure 11.- Shows the electrochemical cell voltage evolution with time for different analyte concentrations after being connected to a specific resistive load.

Figure 12.- a) Shows the relationship between the times elapsed in the drop of the voltage of the electrochemical cell from open-circuit potential to a specific threshold voltage value for different analyte concentrations. b) Shows the influence of the resistor value on the elapsed times for electrochemical cell to reach a fixed threshold of 0.45 V from its open-circuit potential for various analyte concentrations.

Figure 13.- a) Shows the built-up voltage across the capacitor C1 for different analyte concentrations, while the voltage across the electrochemical cell is majorly dropped due to the influence of R1. b) Calibration curve obtained between measured output capacitor voltage and the concentration of analyte.

Figure 14.- (a, b) Shows the modulations of the output voltage levels for different analyte concentrations based on the choice of combinations of R1, R2 and C1

Figure 15.- Shows the experimental results to modulate the level of stable output voltage across capacitor depending on the choice of resistor R2 for a given analyte concentration.

## PREFERRED EMBODIMENT OF THE INVENTION

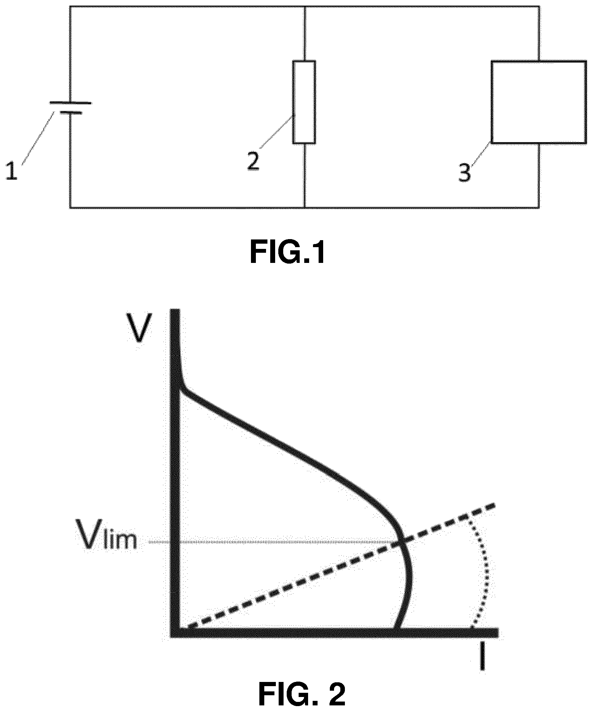

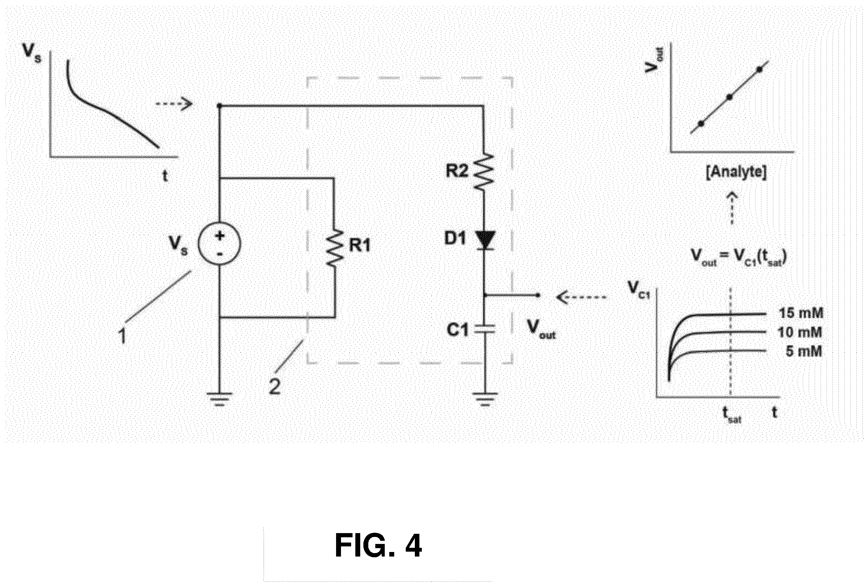

In the following, and supported by figures 1 to 15, the preferred embodiment of the device and procedure for quantification of the concentration of analytes in an electrochemical cell are being described.

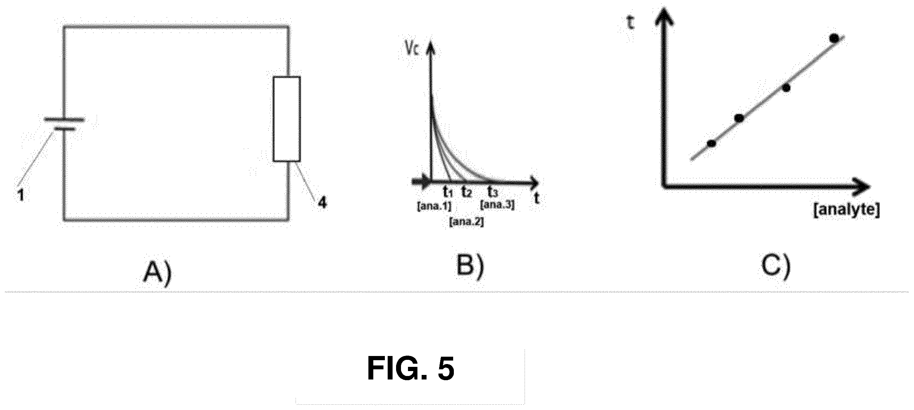

In a first embodiment, as depicted in figure 5, the device comprises an electrochemical cell (1) connected in parallel to a load (2) - which is a capacitor (4) in this case and a readout element (3). Once the circuit is closed, the electrical charge generated in the electrochemical cell is transferred to the capacitor (4). The built-up voltage in the capacitor VC (4) depends on the accumulated charge that has been transferred from the electrochemical cell (1) that at the same time depends on the analyte concentration. Said charge depends on the analyte concentration present in the sample of the electrochemical cell (1).

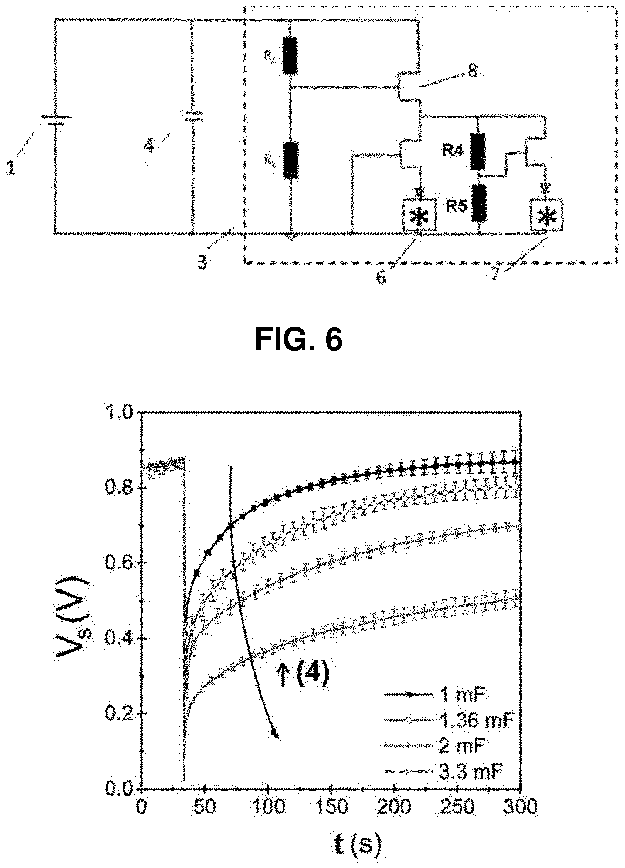

The readout element (3), as shown in figure 6, consists of a set of transistors (8) that are in open or close state depending on the capacitor voltage (4) with the aim of providing a digital result split in different levels of analyte concentration, previously stablished. The readout result is shown in several electrochromic displays (6,7), that will be turned on upon the enabling of the conducting state of the transistors (8), that is, when the capacitor voltage (4) exceeds a threshold value. In this particular configuration, the present embodiment is able to discriminate three different concentration levels of analyte.

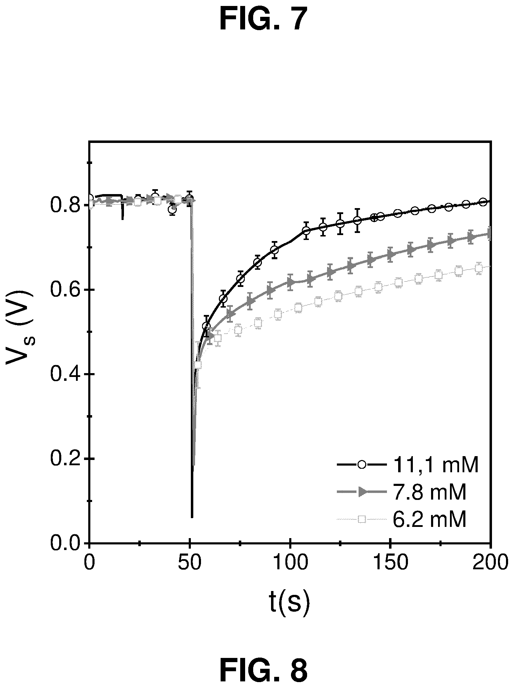

Figure 7 shows the fuel cell voltage evolution when connected to a capacitor C of values 1mF, 1.36mF, 2mF and 3.3mF, while operated with a 7.5mM of glucose concentration. Capacitance values allow tuning the fuel cell (1) output voltage.

Figure 8 shows the experimental electrochemical cell (1) voltage values ($V_S$) with time for different concentrations of glucose (6.2 mM, 7.8 mM and 11.1 mM) when capacitor is set to 2 mF. As shown in the figure, the electrochemical cell (1) voltage value is correlated with the concentration of glucose and therefore, by measuring the electrochemical cell (1) voltage at a specific time, the concentration of analyte can be determined.

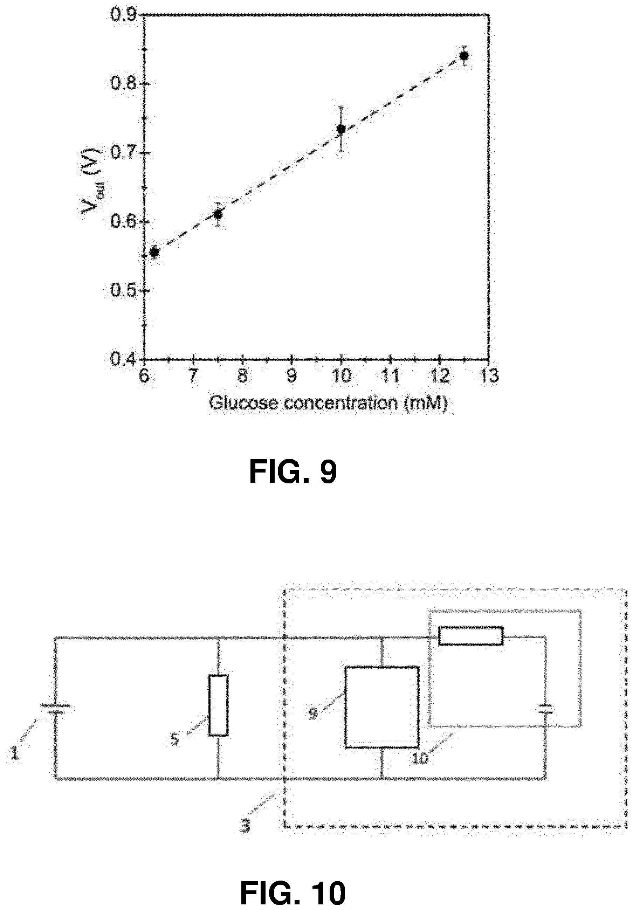

Figure 9 shows the calibration curve of $V_{out}$, which is the capacitor voltage ($V_C(t)$) once the electrochemical cell (1) has been depleted versus the glucose concentration.

The readout unit (3) shown in figure 6, consists on a set of transistors (8) that are in open or close state depending on the capacitor (4) voltage ($V_C(t)$) with the aim of providing a digital result split in different levels of analyte concentration. The readout result is shown in several electrochromic displays (6, 7), that will be turned on upon the enabling of the conducting state of the transistors (8), that is, when the capacitor (4) voltage ($V_C(t)$) exceeds a threshold value. In this particular configuration, the present embodiment is able to discriminate three different concentration levels of analyte.

In another embodiment, as depicted in figure 10, an electrochemical cell (1) is connected in parallel to a load (2) - which in this case is a resistor (5) - and to a readout element (3). The readout element (3) consists of two blocks: a first block (9) that measures the voltage drop at the resistor (5) and detects the threshold voltage values that determine the start and the end points of time monitoring. A second block (10) is used to quantify said time. In this particular case, time is measured by means of an RC circuit, where the electrical current is limited by the resistor and the built-up voltage in the capacitor (4) allows to derive information about the time that the RC circuit has been connected to the electrochemical cell (1).

The built-up voltage of the capacitor in the RC circuit in block (10) depends on the elapsed time in which the voltage of the electrochemical cell (1) evolves from an initial value to a final value. This interval is determined by block (9).

The magnitude of the interval depends on the analyte concentration in the electrochemical cell (1). Therefore, by measuring the built-up voltage in the capacitor of block (10) once the voltage in the electrochemical cell (1) has reached a threshold value, the analyte concentration can be quantified. Higher analyte concentrations originate higher built-up voltages in the capacitor, as it will have been charged for a larger period of time.

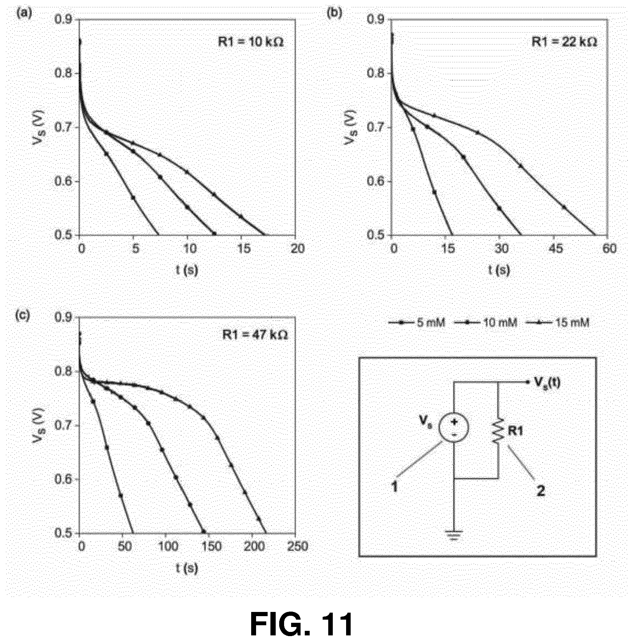

In another embodiment as shown in figure 11, the electrochemical cell (1) is connected to a resistive load. The potential across the electrochemical cell dropped from its open-circuit potential at different rates depending on the analyte concentration for a given resistor value. It can be observed that the decay rate is faster in case of smaller analyte concentrations.

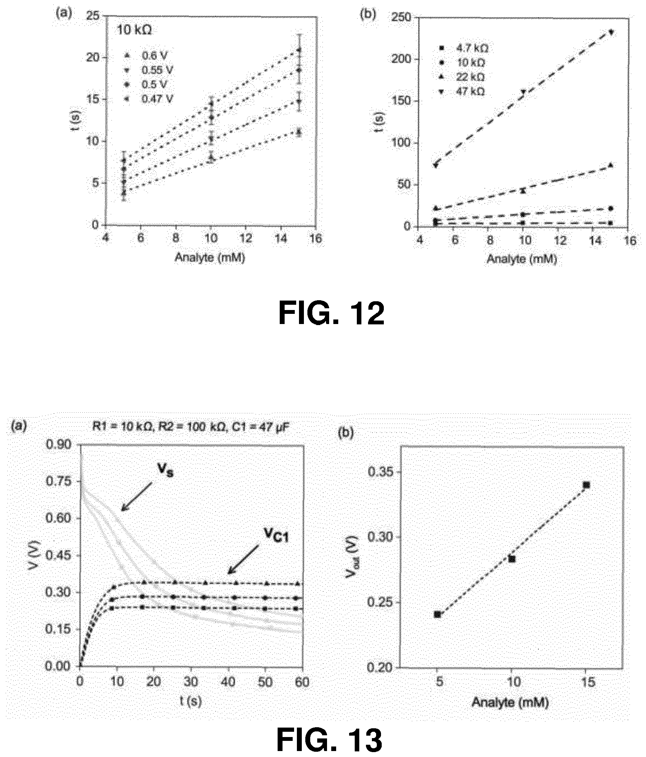

As it also can be seen from figure 11, the drop in these voltages are affected by the value of load resistor used. The rate of the decay in voltage is higher for a greater load value. In this embodiment, the time elapsed for the voltage of electrochemical cell (1) to drop from the open-circuit potential to a specific threshold level (mentioned in legends) when subjected to only a resistive load is presented in figure 12(a). For a particular resistor value of 10 KΩ, a proportional increase in elapsed time is observed with increase in analyte concentrations for different threshold voltage levels. Figure 12(b) shows the elapsed time for the electrochemical cell to reach 0.45 V threshold value from its open-circuit potential when subjected to only a resistive load is shown. It is observed that the slope of the linear fitted curves increased with the increase in load resistor value.

In another embodiment, the electrochemical cell (1) has been connected to the circuit shown in figure 3 with R1=10KOhms, R2=100KOhms and C1=47μF. The electrochemical cell (1) voltage dropped in value due to the major influence of resistor R1. The output voltage in the capacitor builds up during this process until the diode D1 interrupts passage of significant current.

As shown in figure 13, the experimental results indicated different values of output voltage across capacitor for different analyte concentrations. The output voltage maintains a stable value for at least 30 s due to the presence of diode that restricts the immediate discharge of the capacitor.

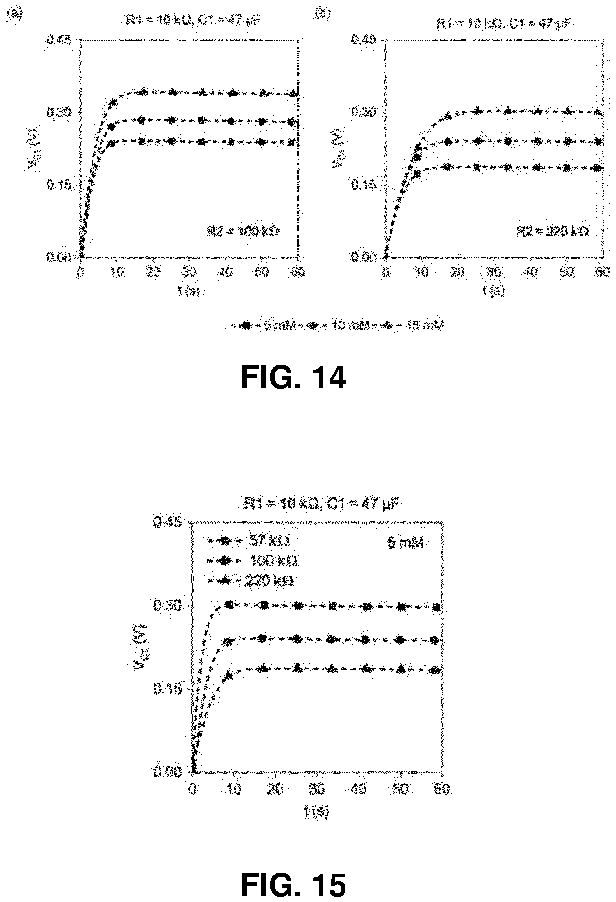

In additional embodiments, the electrochemical cell (1) has been connected to the circuit shown in figure 3 with R1=10KOhms and C1=47μF, and the output voltage levels across the capacitor C1 have been modulated by setting R2 to different values (100 and 220 KOhms) without affecting the pattern of response for different analytes as shown in figure 14. The effect of R2 value on the capacitor built-up voltage has been also measured by setting 5mM analyte concentration and R2 values of 57KΩ, 100 KΩ and 220 KΩ, as shown in figure 15.

**Claims**

1. Device for the quantification of the concentration of analytes in a sample, that comprises:

   - an electrochemical cell (1), which uses a volume of a sample containing an analyte, the concentration of which is to be determined,
   - a load (2), composed of a combination of at least one capacitive load (4) and/or one resistive load (5), connected in parallel with the electrochemical cell (1), with such an equivalent resistance value that puts the electrochemical cell (1) to work under diffusion-limited conditions and that forces the electrochemical cell (1) to enter in a non-steady state in which the output voltage decreases with time, and continuous current is generated from the electrochemical cell (1), the current being transferred by the electrochemical cell (1) during a single discharge cycle totally or partially to a capacitive load (4) and in which the built-up voltage across the capacitive load (4) is an indicator of the analyte concentration in the electrochemical cell (1), and
   - a reading element (3), connected in parallel to at least one of the capacitive (4) or resistive (5) loads composing the load (2), and which measures the voltage of such load (4,5) based on which the concentration of the analyte in the electrochemical cell (1) is determined.

2. The device according to claim 1, wherein the load (2) is predominantly a capacitive load (4) and the resistive contribution to the load (5) is set by the ohmic resistance of the electrodes of the electrochemical cell (1), the connecting tracks between the electrochemical cell (1) and the capacitive load (4) and the electrical connections of the assembly.

3. The device according to claim 1, wherein the capacitive load (4) is composed of a matrix of capacitors, which provides discretized information on the concentration of the analyte in the electrochemical cell (1) from the voltage reached in each of the capacitors.

4. The device according to claim 1, wherein the overall load (2) is composed of two parallel branches connected in parallel to the electrochemical cell (1), and where the first branch, featuring only a resistive element, is the predominant load that sets the electrochemical cell (1) in a diffusion-limited regime and where the second branch is composed of a resistive load (5), a capacitive load (4) and a diode connected in series, and where the operation of diode restricts the current flow in the second branch based on the capacitor and electrochemical cell (1) voltages and allows to hold the charge accumulated in the capacitive load (4).

5. The device of claim 4 wherein the value of the resistive load (5) in the second branch is at least five times the value of the predominant resistive load of the first branch.

6. The device according to claim 1, wherein the load (2) connected to the electrochemical cell (1) is predominantly resistive (5), being preferably a resistor, that sets the electrochemical cell (1) in diffusion-limited regime and where the elapsed time of the voltage decay of the electrochemical cell (1) between two different preset voltage values is measured using a readout unit (3).

7. The device according to claim 1, wherein the readout unit (3) comprises at least:

   - a transistor (8) that is activated when the voltage on the load (2) reaches a threshold value, and
   - an indicator (6), which emits a light, acoustic or vibrating signal when the transistor (8) starts conducting.

8. The device according to claim 1, wherein the readout unit (3) is powered by the energy generated by the electrochemical cell (1).

9. The device according to claim 1, wherein the readout unit (3) is powered by a power source external to the device.

10. The device according to claim 1, wherein the fuel in the electrochemical cell (1) is blood and the analyzed analyte is glucose.

11. The device according to claim 1, wherein the volume of sample containing the analyte to be quantified is in the order of 0.1-50 ul.

12. The device according to claim 1, wherein the sample containing the analyte to be quantified is flowing.

13. A method for the quantification of the concentration of analytes in a sample, which uses the device according to claim 1, and wherein it comprises the steps of:

- connecting the electrochemical cell (1), the load (2) and the reading element (3), working the electrochemical cell (1) under diffusion-limited conditions,
- transferring a continuous current in a single charging cycle from the electrochemical cell (1) to the load (2),
- determining the voltage at the load (2) by means of the reading element (3), and/or determining the time elapsed until a threshold voltage is reached in the electrochemical cell (1) by means of the readout unit (3), and
- determining the analyte concentration in the electrochemical cell (1).

14. The method of claim 13, wherein the load (2) is predominantly a capacitive load (4), and the analyte concentration is determined from the relationship that exists between the built-up voltage at the capacitive load (4) and the analyte concentration in the electrochemical cell (1).

15. The method of claim 13, wherein the load (2) comprises at least two parallel branches connected in parallel to the electrochemical cell (1), and in which a first branch comprises such a resistive element that forces the electrochemical cell (1) to work in a diffusion limited regime and in which a second branch comprises, connected in series, a resistive load (5), a capacitive load (4) and a diode, and the concentration of the analyte is determined from the relationship that exists between the built-up voltage of the capacitive load (4) and the concentration of the analyte in the electrochemical cell (1).

16. The method of claim 13, wherein the load (2) is a predominantly resistive load (5), and the analyte concentration is determined from the relationship between the time elapsed until a threshold voltage in the electrochemical cell (1) is reached and the analyte concentration in the electrochemical cell (1).

**Amended claims under Art. 19.1 PCT**

1. Device for the quantification of the concentration of analytes in a sample, that comprises:

- an electrochemical cell (1), that consists at least of a sensing electrode, fabricated out of a material that is catalytic for the redox reaction of the analyte, and a complementary electrode, formed by a redox species complementary to the sensing electrode,
- a load (2), composed of two parallel branches connected in parallel to the electrochemical cell (1), and where a first branch comprises a resistive element (R1), configured to set the electrochemical cell (1) in a diffusion-limited regime, and where a second branch is composed of a resistive load (R2), a capacitive load (C1) and a diode (D1) connected in series, being the diode configured to restrict current flow in the second branch based on the capacitive load (4) and electrochemical cell (1) voltages and to allow to hold the charge accumulated in the capacitive load (4), and
- a reading element (3), connected in parallel to the load (2).

2. The device of claim 1, wherein the value of the resistive load (R2) in the second branch is at least five times the value of the resistive element (R1) in the first branch.

3. The device according to claim 1, wherein the readout unit (3) comprises at least:

- a transistor (8) that is configured to activate when the voltage on the load (2) reaches a threshold value, and
- an indicator (6), configured to emit a light, acoustic or vibrating signal when the transistor (8) starts conducting.

4. The device according to claim 1, wherein the fuel in the electrochemical cell (1) is blood and the analyzed analyte is glucose.

5. The device according to claim 1, wherein the reading element (3) comprises a voltage reading unit and/or a time reading unit.

6. The device according to claim 5, wherein the voltage reading unit comprises an element selected from a set of thyristors, an integrated circuit, an application-specific integrated circuit (ASIC), a multimeter, a USB communication system with a computer, a RFID (Radio-Frequency Identification) communication system, an NFC (Near-Field Communication) communication system and Bluetooth.

7. The device according to claim 5, wherein the time reading unit comprises an element selected from a clock, a quartz crystal and an RC circuit.

8. A method for the quantification of the concentration of analytes in a sample, which uses the device according to claim 1, and wherein it comprises the steps of:

- connecting the electrochemical cell (1), the load (2) and the reading element (3), working the electrochemical cell (1) under diffusion-limited conditions,
- transferring a continuous current in a single charging cycle from the electrochemical cell (1) to the load (2),
- determining the voltage at the load (2) by means of the reading element (3), and/or determining the time elapsed until a threshold voltage is reached in the electrochemical cell (1) by means of the readout unit (3), and
- determining the analyte concentration in the electrochemical cell (1).

9. The method according to claim 8, wherein the analyte concentration is determined from the relationship between the time elapsed until a threshold voltage in the electrochemical cell (1) is reached and the analyte concentration in the electrochemical cell (1).

10. The method according to claim 8, wherein the reading unit (3) measures the time elapsed between two different predefined voltage values in the electrochemical cell (1).

**FIG.1**

**FIG. 2**

FIG. 3

EP 3 954 986 A1

**FIG. 4**

FIG. 5

## FIG. 6

# FIG. 7

# FIG. 8

**FIG. 9**

**FIG. 10**

# FIG. 11

**FIG. 12**

**FIG. 13**

**FIG. 14**

**FIG. 15**

<div align="center">

## INFORME DE BÚSQUEDA INTERNACIONAL

</div>

| | Solicitud internacional N° |
|---|---|
| | PCT/ES2020/070237 |

**A. CLASIFICACIÓN DEL OBJETO DE LA SOLICITUD**

INV.  G01N27/327
ADD.  G01N27/416

De acuerdo con la Clasificación Internacional de Patentes (CIP) o según la clasificación nacional y CIP.

**B. SECTORES COMPRENDIDOS POR LA BÚSQUEDA**

Documentación mínima buscada (sistema de clasificación seguido de los símbolos de clasificación)

G01N

Otra documentación consultada, además de la documentación mínima, en la medida en que tales documentos formen parte de los sectores comprendidos por la búsqueda

Bases de datos electrónicas consultadas durante la búsqueda internacional (nombre de la base de datos y, si es posible, términos de búsqueda utilizados)   EPO-Internal, WPI Data

**C. DOCUMENTOS CONSIDERADOS RELEVANTES**

| Categoría* | Documentos citados, con indicación, si procede, de las partes relevantes | Relevante para las reivindicaciones N° |
|---|---|---|
| X | US 2010/213057 A1 (FELDMAN BENJAMIN [US] ET AL) 26 Agosto 2010 (2010-08-26) citado en la aplicación | 1,3,8-13 |
| Y | resumen; figura 1 parrafos [0027] - [0039] | 2,6,7, 14,16 |
| A | parrafo [0042] parrafo [0050] parrafo [0007] | 4,5,15 |
| | ----- | |
| X | WO 03/019170 A1 (YISSUM RES DEV CO [IL]; WILLNER ITAMAR [IL]; KATZ EVGENY [IL]) 6 Marzo 2003 (2003-03-06) citado en la aplicación | 1,3,8-13 |
| Y | resumen | 2,6,7, 14,16 |
| A | -/-- | 4,5,15 |

☒ En la continuación del Recuadro C se relacionan otros documentos     ☒ Los documentos de familias de patentes se indican en el Anexo

| * Categorías especiales de documentos citados: | "T" documento ulterior publicado con posterioridad a la fecha de presentación internacional o de prioridad que no pertenece al estado de la técnica pertinente pero que se cita por permitir la comprensión del principio o teoría que constituye la base de la invención. |
|---|---|
| "A" documento que define el estado general de la técnica no considerado como particularmente relevante. | |
| "E" solicitud de patente o patente anterior pero publicada en la fecha de presentación internacional o en fecha posterior. | "X" documento particularmente relevante; la invención reivindicada no puede considerarse nueva o que implique una actividad inventiva por referencia al documento aisladamente considerado. |
| "L" documento que puede plantear dudas sobre una reivindicación de prioridad o que se cita para determinar la fecha de publicación de otra cita o por una razón especial (como la indicada). | |
| "O" documento que se refiere a una divulgación oral, a una utilización, a una exposición o a cualquier otro medio. | "Y" documento particularmente relevante; la invención reivindicada no puede considerarse que implique una actividad inventiva cuando el documento se asocia a otro u otros documentos de la misma naturaleza, cuya combinación resulta evidente para un experto en la materia. |
| "P" documento publicado antes de la fecha de presentación internacional pero con posterioridad a la fecha de prioridad reivindicada. | |
| | "&" documento que forma parte de la misma familia de patentes. |

| Fecha en que se ha concluido efectivamente la búsqueda internacional. | Fecha de expedición del informe de búsqueda internacional |
|---|---|
| 17 Julio 2020 | 27/07/2020 |
| Nombre y dirección postal de la Administración encargada de la búsqueda internacional   European Patent Office, P.B. 5818 Patentlaan 2 NL - 2280 HV Rijswijk Tel. (+31-70) 340-2040, Fax: (+31-70) 340-3016 | Funcionario autorizado |
| | Knoll, Stephan |
| N° de fax | N° de teléfono |

Formulario PCT/ISA/210 (segunda hoja) (Enero 2015)

## INFORME DE BÚSQUEDA INTERNACIONAL

| | Solicitud internacional N° |
|---|---|
| | PCT/ES2020/070237 |

C (continuación).                    DOCUMENTOS CONSIDERADOS RELEVANTES

| Categoría* | Documentos citados, con indicación, si procede, de las partes relevantes | Relevante para las reivindicaciones N° |
|---|---|---|
| X | & US 2004/245101 A1 (WILLNER ITAMAR [IL] ET AL) 9 Diciembre 2004 (2004-12-09) | 1,3,8-13 |
| Y | parrafo [0023] parrafo [0024] | 2,6,7, 14,16 |
| A | parrafo [0025] parrafo [0033] parrafo [0056] ----- | 4,5,15 |
| Y | US 2018/233761 A1 (SLAUGHTER GYMAMA [US]) 16 Agosto 2018 (2018-08-16) parrafo [0076]; figura 9 parrafo [0095] parrafo [0096] parrafo [0104] ----- | 2,14 |
| Y | US 2016/187286 A1 (WEI DI [GB] ET AL) 30 Junio 2016 (2016-06-30) parrafo [0046] parrafo [0045] parrafo [0042] parrafo [0039] parrafo [0036] ----- | 7 |
| Y | US 2010/200429 A1 (TSUGAWA WAKAKO [JP] ET AL) 12 Agosto 2010 (2010-08-12) parrafo [0072] - parrafo [0076] ----- | 2,6 |

Formulario PCT/ISA/210 (continuación de la segunda hoja) (Enero 2015)

**INFORME DE BÚSQUEDA INTERNACIONAL**

Información relativa a miembros de familias de patentes

| Solicitud internacional Nº |
| --- |
| PCT/ES2020/070237 |

```
US 2010213057   A1   26-08-2010   EP        2401390 A1     04-01-2012
                                   EP        3255154 A1     13-12-2017
                                   US     2010213057 A1     26-08-2010
                                   US     2010213082 A1     26-08-2010
                                   US     2017188904 A1     06-07-2017
                                   US     2018296139 A1     18-10-2018
                                   WO     2010099335 A1     02-09-2010
-------------------------------------------------------------------------
WO 03019170     A1   06-03-2003   EP        1421370 A1     26-05-2004
                                   IL         145182 A      20-11-2005
                                   JP     2005501253 A      13-01-2005
                                   JP     2009236923 A      15-10-2009
                                   US     2004245101 A1     09-12-2004
                                   WO       03019170 A1     06-03-2003
-------------------------------------------------------------------------
US 2018233761   A1   16-08-2018   NINGUNO
-------------------------------------------------------------------------
US 2016187286   A1   30-06-2016   CN      105612419 A      25-05-2016
                                   EP        3030892 A1     15-06-2016
                                   GB        2516932 A      11-02-2015
                                   US     2016187286 A1     30-06-2016
                                   WO     2015018973 A1     12-02-2015
-------------------------------------------------------------------------
US 2010200429   A1   12-08-2010   CA        2699828 A1     26-03-2009
                                   CA        2972876 A1     26-03-2009
                                   CA        2972877 A1     26-03-2009
                                   CN      101802601 A      11-08-2010
                                   EP        2192404 A1     02-06-2010
                                   EP        2522740 A2     14-11-2012
                                   EP        2862940 A1     22-04-2015
                                   ES        2387631 T3     27-09-2012
                                   ES        2534129 T3     17-04-2015
                                   JP        5051479 B2     17-10-2012
                                   JP        5325322 B2     23-10-2013
                                   JP     2012255790 A      27-12-2012
                                   JP   WO2009037840 A1     06-01-2011
                                   KR     20100082773 A     19-07-2010
                                   RU     2010115257 A      27-10-2011
                                   US     2010200429 A1     12-08-2010
                                   US     2013015063 A1     17-01-2013
                                   US     2013015078 A1     17-01-2013
                                   WO     2009037840 A1     26-03-2009
-------------------------------------------------------------------------
```

Formulario PCT/ISA/210 (anexo_familia de patentes) (Enero 2015)

**EP 3 954 986 A1**

## REFERENCES CITED IN THE DESCRIPTION

**Patent documents cited in the description**

- US 20040245101 A1
- WO 2005093400 A1
- US 9220451 B2
- US 20100213057 A1
- US 20100200429 A1